# EUROPÄISCHE PATENTSCHRIFT

(11) **EP 1 413 476 B1**
(45) Veröffentlichungstag und Bekanntmachung des Hinweises auf die Patenterteilung: **03.08.2005**
(21) Anmeldenummer: 02024002.4
(22) Anmeldetag: 26.10.2002
(51) Int. Cl.: B60P 1/44

(54) **Unterfahrbare Hubladebühne mit Schlittenführung**
Under run cargolift with sliding guidance
Hayon élévateur avec un guide de glissement

(43) Veröffentlichungstag der Anmeldung: 28.04.2004
(73) Patentinhaber: Bär, Gerd, 74078 Heilbronn (DE)
(72) Erfinder: Bär, Gerd, 74078 Heilbronn (DE)
(74) Vertreter: Kohler Schmid Möbus

(56) Entgegenhaltungen:
- EP-A- 0 629 524
- EP-A- 0 662 405
- PATENT ABSTRACTS OF JAPAN vol. 1996, no. 10, 31. Oktober 1996 (1996-10-31) & JP 08 150869 A (NIPPON RIFUTO KK), 11. Juni 1996 (1996-06-11)
- FA. TRÖSCH AG: "Betriebsanleitung Trösch Cargolift Hydfalt 3" HOMEPAGE FA. TRÖSCH AG SCHWEIZ, [Online] Juli 2002 (2002-07), XP002232265 Gefunden im Internet: <URL:http://www.troesch-ag.ch/PDF/Betriebs anleitungen/01125377_Tr_hydfalt_d_0702.pdf > [gefunden am 2003-02-19]

## Beschreibung

Die vorliegende Erfindung betrifft eine Hubladebühne für ein Fahrzeug gemäß dem Oberbegriff des Patentanspruchs 1.

Eine derartige unterfahrbare Hubladebühne ist beispielsweise durch die Hydfalt 3-Baureihe der Firma Gerd Bär GmbH, Heilbronn, bekannt geworden.

Desweiteren ist eine unterfahrbare Hubladebühne mit einem vorderen und hinterem Führungselement je Schlitten aus der EP-A1-0 629 524 bekannt.

Hubladebühnen sind an LKWs oder Anhänger montiert und dienen zu deren Be- und Entladung. Unterfahrbare Hubladebühnen sind mittels eines Führungswerks am Fahrgestell montiert und können nach ein- oder zweimaligem Falten der Plattform vollständig unter den Aufbau bzw. Fahrgestellrahmen untergefahren werden, so dass sie an keiner Stelle nach hinten über den Aufbau hinausragen und stören könnten. Derartige unterfahrbare Hubladebühnen werden für Fahrzeuge mit Wechselaufbauten und alle Fahrzeuge, die an Verladeschleusen der Kühlhäuser andocken müssen, gebraucht.

Bei der Hydfalt 3- Baureihe ist das Führungswerk durch zwei Führungsschienen gebildet, in denen das Hubwerk jeweils mit einem vertikalen Schlitten hängend gehalten und gleitend zwischen der hinter dem Fahrzeug befindlichen Arbeitsstellung und der unter dem Fahrzeug befindlichen Fahrstellung verfahrbar ist. Dabei umfasst jeder Schlitten ein vorderes Führungselement mit einem oberseitigen Gleitstück, das an einer oberen Führungsfläche der Führungsschiene anliegt, und ein hinteres Führungselement mit einem unterseitigen Gleitstück, das an einer unteren Führungsfläche der Führungsschiene anliegt. Die Führung ist innerhalb der Führungsschienen innenliegend angeordnet, so dass die Gleitflächen vor Schmutz geschützt sind. Außerdem kann die Führungsschiene an beliebiger Stelle mit dem Fahrzeug verbunden oder an Traversen befestigt werden. Dadurch ist eine sehr leichte Dimensionierung der Führungsschiene möglich. Weiter bietet diese Technik in Verbindung mit der entsprechenden Auswahl der Gleitpartner eine wartungsfreie Gleitführung. Diese Gleitführungen haben die Aufgabe, das Hubwerk und die Plattform mit deren Eigengewicht aufzunehmen und beim Ein- und Ausfaltvorgang gleitend auf das Führungselement zu übertragen. Desgleichen kommt den Führungselementen die Aufgabe zu, beim Ein- und Ausfahren die horizontale Führung zu übernehmen. Durch den mittig angreifenden Verschiebezylinder und die ungleiche Reibung muss gleichzeitig auch die horizontale Führung gegeben sein. Durch die ungünstigen Hebelverhältnisse - dem Abstand der Führungselemente einerseits und dem Schwerpunkt der Hubladebühne andererseits - entstehen auch große horizontale Führungskräfte. Da die Gleitmaterialien, im Wesentlichen bestehend aus Kunststoff oder Kunststoffverbundmaterial, einem Verschleiß unterliegen, sind bei der Hydfalt 3-Baureihe die Gleitstücke zur Erzielung einer gleichmäßigen Abnutzung am Schlitten aufgehängt. Dazu hat die symmetrische Führungskonstruktion jeweils für die Zug- und Druckseite auf beiden Seiten der Schlittenplatte Führungselemente aus Aluminium, die wiederum nach unten offene Kammern zur Aufnahme der Gleitelemente haben und über einen speziell gelagerten Bolzen, der durch die Schlittenplatte geht, gemeinsam gelagert sind. Diese Konstruktion erfordert eine relativ hohe Präzision mit aufwändigen Maßnahmen, die Träger und Bolzen gegen Rost zu schützen. Auf der Druckseite des Schlittens wird im Bereich der Schlittenplattenstärke Führungsfläche verschenkt. Die Kräfteableitung erfolgt bei dieser Konstruktion durch den Bolzen in die Schlittenplatte. Dabei entsteht eine sehr hohe Lochleibung, die es erfordert, eine hohe Werkstofffestigkeit zu wählen. Trotzdem muss die Schlittenplattenstärke unnötig dick gewählt werden. Diese bekannte Konstruktion ist somit technisch sehr aufwändig und deshalb teuer.

Die Aufgabe der vorliegenden Erfindung ist es daher, bei einer unterfahrbaren Hubladebühne die Befestigung der Führungselemente am Schlitten zu vereinfachen.

Diese Aufgabe wird erfindungsgemäß durch eine Hubladebühne gemäß dem Patentanspruch 1 gelöst. Weitere vorteilhafte Ausgestaltungen der Erfindung sind Gegenstand der Unteransprüche.

Die erfindungsgemäße Konstruktion ist äußerst servicefreundlich. Das Auswechseln der Gleitstücke geht in einfachster Form ohne jegliche Verbindungsmittel. Die Führungselemente sind einfacher herauszunehmen, die Gleitstücke zu wechseln und dann wieder einzusetzen. Fehlermöglichkeiten durch ungeübtes Personal sind hier nahezu ausgeschlossen. Dies gilt auch für die Neumontage.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine Seitenansicht der unterfahrbaren Hubladebühne sowohl in ihrer untergefahrenen Fahrposition als auch in ihrer ausgefahrenen Arbeitsposition;
- Fig. 2: einen in einer Führungsschiene verfahrbaren Schlitten der unterfahrbaren Hubladebühne der Fig. 1;
- Fig. 3: eine Detailansicht des in Fig. 2 gezeigten Schlittens im Bereich eines vorderen Führungselements;
- Fig. 4: eine Detailansicht des in Fig. 2 gezeigten Schlittens im Bereich eines hinteren Führungselements; und
- Fig. 5: eine Schnittansicht gemäß II-II in Fig. 2.

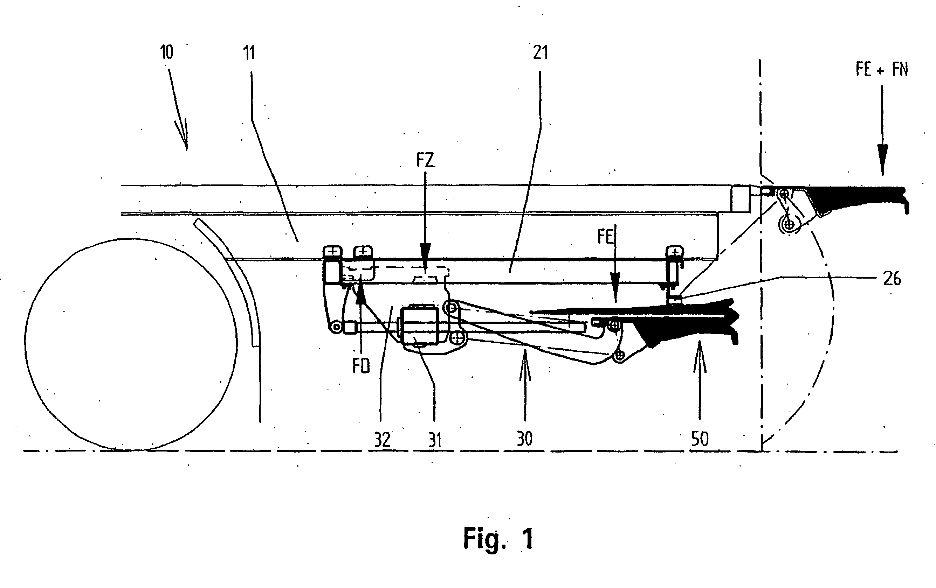

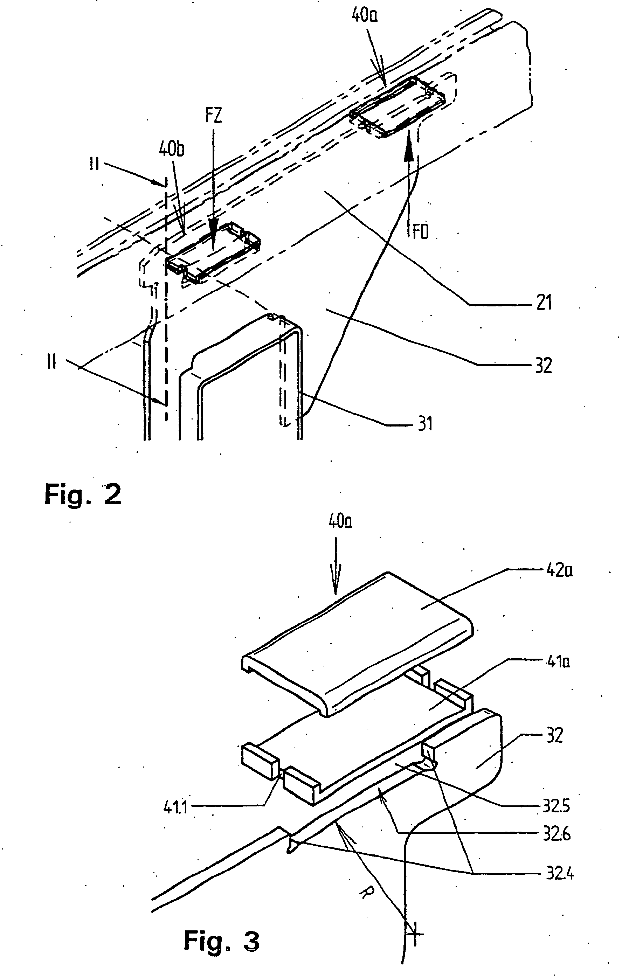

**Fig. 1** zeigt die in ihre Fahrposition untergefahrene Hubladebühne mit eingefalteter Plattform **50**, angebaut an das Heck eines Sattelaufliegers (Trailer) **10**. Das Hubwerk **30** mit der Plattform 50 ist über Führungselemente **40a, 40b** (Fig. 2) im Bereich **FZ** und **FD** mittels zweier Führungsschienen **21** mit dem Trailer 10 verbunden. Der Schwerpunkt des Eigengewichts von Hubwerk 30 und Plattform 50 liegt im Bereich von **FE**. Diese Kraft erzeugt in FZ die Zugkraft und in FD die Druckkraft.

In der abgebrochen dargestellten Arbeitsstellung der Hubladebühne wirken auf die Plattform 50 das Eigengewicht **FE** und die Nutzlast **FN**, die in diesem Falle die höchsten Kräfte in FZ und FD erzeugen. Beim Verstauvorgang wird das Hubwerk 30 mit der gefalteten Plattform 50 in die Fahrposition gefahren. Hierbei bleiben Tragarme und Plattform 50 unterhalb des Niveaus der Gummipuffer **26**. Danach wird durch die Funktion Heben die Plattform 50 gegen die Gummipuffer 26 hochgefahren, um die Hubladebühne zu verspannen. Dadurch vergrößern sich natürlich die Kräfte, die in FZ und FD wirken.

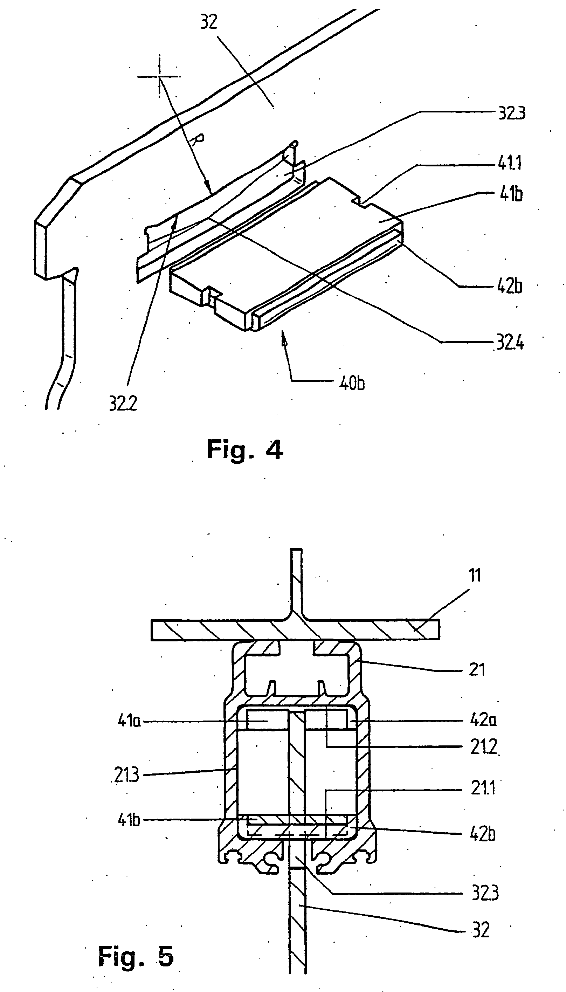

**Fig. 2** zeigt teilweise das Tragrohr **31** mit der vertikalen Schlittenplatte **32** in der gestrichelt dargestellten Führungsschiene 21. Im Bereich FZ ist die Lage des Führungselement 40b zu erkennen. Im Bereich FD liegt das vordere Führungselement 40a an der nach oben offenen Ausnehmung **32.5** (Fig. 3) des Schlittens 32. Im Bereich von FZ durchdringt das hintere Führungselement 40b im Bereich der Öffnung **32.3** (Fig. 4) den Schlitten 32. Im Bereich FD erfolgt die Anordnung und Kräfteübertagung analog FZ, jedoch mit dem Unterschied, dass die Ausnehmung 32.5 nach oben offen ist.

**Fig. 3** zeigt das vordere.Führungselement 40a, bestehend aus dem Gleitstückträger **41a** und dem Gleitstück **42a,** die beide formschlüssig ineinander greifen. Der vordere Gleitstückträger 41a ist von oben lose auf den plattenförmigen Schlitten 32 aufgesteckt und dort sowohl vertikal verschiebbar geführt als auch aufgrund von ausreichend Spiel verkippbar gelagert. Dazu hat der Gleitstückträger 41a stirnseitige Führungsausnehmungen **41.1,** die über die senkrechte Fläche **32.4** des Schlittens 32 übergreifen. Der Kräfteübertrag auf den Gleitstückträger 41a erfolgt im Bereich FD durch die radiusförmige Anlagefläche **32.6** der Ausnehmung 32.5, die konvex (Radius R) in die Ausnehmung 32.5 hinein gekrümmt ist. Die Kräfte werden flächig vom Gleitstückträger 41a auf das Gleitstück 42a und von diesem auf die obere Gleitbahn **21.2** (Fig. 5) der Führungsschiene 21 weitergegeben. Der Gleitstückträger 41a, gesehen quer zur Führungsrichtung des Schlittens 32, und das Gleitstück 42a, gesehen in Führungsrichtung des Schlittens 32, sind im Querschnitt jeweils U-förmig und greifen formschlüssig und vollflächig ineinander.

**Fig. 4** zeigt das hintere Führungselement 40b, bestehend aus dem Gleitstückträger **41b** und dem Gleitstück **42b**. Der hintere Gleitstückträger 41b durchdringt den Schlitten 32 in der Öffnung 32.3, die so groß ausgeführt sein muss, dass der Gleitstückträger 41b samt Gleitstück 42b montiert werden kann. Der hintere Gleitstückträger 41b ist von unten lose auf den plattenförmigen Schlitten 32 angesteckt und dort sowohl vertikal verschiebbar als auch aufgrund von ausreichend Spiel verkippbar gelagert. Dazu hat der Gieftstückträger 41b stimseitige Führungsausnehmungen **41.1**, die über die senkrechte Fläche 32.4 des Schlittens 32 übergreifen. Der Kräfteübertrag auf den Gleitstückträger 41b erfolgt im Bereich FZ durch die radiusförmige Auflagefläche **32.2** der Öffnung 32.3, die konvex (Radius R) in die Öffnung 32.3 hinein gekrümmt ist. Die Kräfte werden flächig vom Gleitstückträger 41b auf das Gleitstück 42b und von diesem auf die untere Gleitbahn **21.1** (Fig. 5) der Führungsschiene 21 weitergegeben. Der Gleitstückträger 41b, gesehen quer zur Führungsrichtung des Schlittens 32, und das Gleitstück 42b, gesehen in Führungsrichtung des Schlittens 32, sind im Querschnitt jeweils U-förmig und greifen formschlüssig und vollflächig ineinander.

**Fig. 5** zeigt den Schnitt durch den Längsträger **11** des Trailers 10 den Schlitten 32 und die Führungsschiene 21 im Bereich zwischen FZ und FD. Hier wird deutlich, dass die Führungselemente 40a, 40b durch die Gleitstücke 42a, 42b und den Gleitstückträger 41a, 41b den Schlitten 32 sowohl in vertikaler Richtung auf der unteren Gleitbahn 21.1 als auch auf der oberen Gleitbahn 21.2 führen. Die horizontale Führung erfolgt durch die senkrechten Flächen der Gleitstücke 42 an den senkrechten Innenflächen **21.3** der Führungsschiene 21. Die Weiterleitung der horizontalen Führungskräfte vom Gleitstück 42 auf den Gleitstückträger 41 erfolgt durch das formschlüssige Ineinandergreifen dieser beiden Teile. Die formschlüssige Verbindung der Führungselemente 40 mit dem Schlitten 32 erfolgt durch das formschlüssige Ineinandergreifen der Führungsausnehmungen 41.1, die über die senkrechte Fläche 32.4 (Fign. 3, 4) des Schlittens 32 übergreifen. Im gezeigten Ausführungsbeispiel sind die beiden Gleitstückträger 41a, 41b und ihre Gleitstücke 42a, 42b jeweils identisch ausgebildet.

Diese Schlittenführung kommt mit einer nicht mehr zu unterbietenden Anzahl von Bauteilen aus. Der lasergeschnittene Schlitten 32 kann durch Anschweißen mit dem Tragrohr 31 verbunden werden. Die Führungselemente 40 können durch formschlüssige Gestaltung einfach vor dem Zusammenbau mit der Führungsschiene 21 eingelegt werden. Die Führungselemente 40 verbinden das Hubwerk 30 und die Plattform 50 mit dem Führungswerk 20. Die Gleitstückträger 41 sind einfache Frästeile aus normalem Baustahl. Der Schlitten 32 selbst ist aus hochfestem Feinkornstahl hergestellt. Das Gleitstück 42 wird ebenfalls durch reinen Formschluss in allen Kraftrichtungen ohne jegliche Verbindungsmittel mit dem Gleitstückträger 41 verbunden. Durch.die radiusförmige Flächen 32.2, 32.6 in der Öffnung 32.3 und der Ausnehmung 32.5 ist durch Verkippen der Gleitstückträger 41a,41b die vollflächige Anlage der Gleitstücke 42 an der unteren Gleitbahn 21.1 und oberen Gleitbahn 21.2 sichergestellt. Selbst bei Abnutzung der Gleitstücke 42 ist die gleichmäßige Flächenpressung zwischen Gleitstück 42 und der unteren Gleitbahn 21.2 und oberen Gleitbahn 21.2 gesichert.

Durch die Werkstoffauswahl, nämlich hochfester Feinkornstahl am Schlitten 32 und relativ weicher Baustahl beim Gleitstückträger 41, wird beim Überschreiten der Werkstofffestigkeit das Material so lange fließen, bis sich die Fläche so viel vergrößert hat, dass der Werkstoff die Kräfte aufnehmen kann. Dieser Vorgang bewegt sich weit unterhalb eines Millimeters und ist deshalb für die Funktion ohne Bedeutung. Das gleiche gilt für Ungenauigkeiten, die durch das Tragrohr 31 und dem Schlitten 32 gebildet werden. Fertigungstechnisch bedingte Abweichung vom rechten Winkel in der horizontalen Ebene können auf gleiche Weise ausgeglichen werden.

## Patentansprüche

1. Hubladebühne für ein Fahrzeug, mit einem Hubwerk (30) zum Heben und Senken einer Plattform (50) und mit Führungsschienen (21), in denen das Hubwerk (30) jeweils mit einem vertikalen Schlitten (32) hängend gehalten und gleitend zwischen einer hinter dem Fahrzeug befindlichen Arbeitsstellung und einer unter dem Fahrzeug befindlichen Fahrstellung verfahrbar ist, wobei jeder Schlitten (32) ein vorderes Führungselement (40a) mit einem oberseitigen Gleitstück (42a) und ein hinteres Führungselement (40b) mit einem unterseitigen Gleitstück (42b) aufweist,
**dadurch gekennzeichnet,**
**dass** das vordere Führungselement (40a) von oben auf den Schlitten (32) aufgesteckt ist und dort rechtwinklig zur Steckrichtung auf dem Schlitten (32) arretiert ist, und/oder
**dass** das hintere Führungselement (40b) in einer Öffnung (32.3) des Schlittens (32) von unten an den Schlitten (32) angesteckt ist und dort rechtwinklig zur Steckrichtung am Schlitten (32) arretiert ist.

2. Hubladebühne nach Anspruch 1, **dadurch gekennzeichnet, dass** das vordere Führungselement (40a) in eine nach oben offene Ausnehmung (32.5) des Schlittens (32) eingelegt ist.

3. Hubladebühne nach Anspruch 1 oder 2, **dadurch gekennzeichnet, dass** das vordere Führungselement (40a) in der Ausnehmung (32.5) des Schlittens (32) sowohl vertikal verschiebbar geführt als auch kippbar gelagert ist.

4. Hubladebühne nach Anspruch 3, **dadurch gekennzeichnet, dass** eine mit dem Gleitstück (42a) des vorderen Führungselements (40a) zusammenwirkende Auflagefläche (32.6) des Schlittens (32) konvex in die Ausnehmung (32.5) des Schlittens (32) hinein gekrümmt ist.

5. Hubladebühne nach einem der vorhergehenden Ansprüche, **dadurch gekennzeichnet, dass** das hintere Führungselement (40b) in der Ausnehmung (32.5) des Schlittens (32) sowohl vertikal verschiebbar geführt als auch kippbar gelagert ist.

6. Hubladebühne nach einem der vorhergehenden Ansprüche, **dadurch gekennzeichnet, dass** eine mit dem Gleitstück (42b) des hinteren Führungselements (40b) zusammenwirkende Anlagefläche (32.2) des Schlittens (32) konvex in die Öffnung (32.3) des Schlittens (32) hinein gekrümmt ist.

7. Hubladebühne nach einem der vorhergehenden Ansprüche, **dadurch gekennzeichnet, dass** das vordere und/oder das hintere Führungselement (40a; 40b) zu beiden Seiten des Schlittens (32) übersteht.

8. Hubladebühne nach einem der vorhergehenden Ansprüche, **dadurch gekennzeichnet, dass** das Gleitstück (42a, 42b) des vorderen und/oder des hinteren Führungselements (40a, 40b), gesehen in Führungsrichtung des Schlittens (32), im Querschnitt U-förmig ist.

9. Hubladebühne nach einem der vorhergehenden Ansprüche, **dadurch gekennzeichnet, dass** das vordere und/oder das hintere Führungselement (40a; 40b) einen Gleitstückträger (41a; 41b) aufweist, an dem das Gleitstück (42a, 42b) gehalten ist.

10. Hubladebühne nach Anspruch 8 und 9, **dadurch gekennzeichnet, dass** der vordere Gleitstückträger (41a) und/oder der hintere Gleitstückträger (41b), gesehen quer zur Führungsrichtung des Schlittens (32), im Querschnitt U-förmig ist und dass der Gleitstückträger (41a; 41b) und sein Gleitstück (42a), jeweils 90° zueinander verdreht, formschlüssig und insbesondere vollflächig ineinander greifen.

11. Hubladebühne nach Anspruch 9 oder 10, **dadurch gekennzeichnet, dass** die beiden Gleitstückträger (41a, 41b) und/oder ihre Gleitstücke (42a, 42b) jeweils identisch ausgebildet sind.

## Claims

1. Loading platform for a vehicle, having a lifting mechanism (30) for raising and lowering a platform (50), and having guide rails (21), in which the lifting mechanism (30) is held suspended, in each case with a vertical slide (32), and can be moved in a sliding manner between an operating position located behind the vehicle and a travelling position located under the vehicle, each slide (32) having a front guide element (40a) with a top-side sliding piece (42a) and a rear guide element (40b) with a bottom-side sliding piece (42b),
**characterized**
**in that** the front guide element (40a) is plugged onto the slide (32) from above and is there locked on the slide (32) at right angles to the plug-in direction, and/or
**in that** the rear guide element (40b) is plugged onto the slide (32) from below in an opening (32.3) in the slide (32) and is there locked on the slide (32) at right angles to the plug-in direction.

2. Loading platform according to Claim 1, **characterized in that** the front guide element (40a) is inserted into a recess (32.5) in the slide (32) which is open at the top.

3. Loading platform according to Claim 1 or 2, **characterized in that** the front guide element (40a) is mounted in the recess (32.5) in the slide (32) both guided such that it can be displaced vertically and also such that it can be tilted.

4. Loading platform according to Claim 3, **characterized in that** a supporting surface (32.6) belonging to the slide (32) and interacting with the sliding piece (42a) of the front guide element (40a) is curved convexly into the recess (32.5) in the slide (32).

5. Loading platform according to one of the preceding claims, **characterized in that** the rear guide element (40b) is mounted in the recess (32.5) in the slide (32) both guided such that it can be displaced vertically and such that it can be tilted.

6. Loading platform according to one of the preceding claims, **characterized in that** a supporting surface (32.2) belonging to the slide (32) and interacting with the sliding piece (42b) of the rear guide element (40b) is curved convexly into the opening (32.3) in the slide (32).

7. Loading platform according to one of the preceding claims, **characterized in that** the front and/or the rear guide element (40a; 40b) projects on both sides of the slide (32).

8. Loading platform according to one of the preceding claims, **characterized in that** the sliding piece (42a, 42b) of the front and/or the rear guide element (40a, 40b) is U-shaped in cross section, as viewed in the guide direction of the slide (32).

9. Loading platform according to one of the preceding claims, **characterized in that** the front and/or the rear guide element (40a; 40b) has a sliding-piece carrier (41a; 41b) on which the sliding piece (42a, 42b) is held.

10. Loading platform according to Claim 8 and 9, **characterized in that** the front sliding-piece carrier (41a) and/or the rear sliding-piece carrier (41b) is U-shaped in cross section, as viewed transversely with respect to the guide direction of the slide (32), and **in that** the sliding-piece carrier (41a; 41b) and its sliding piece (42a), in each case rotated 90° with respect to one another, interengage with a form fit and in particular over the entire surface.

11. Loading platform according to Claim 9 or 10, **characterized in that** the two sliding-piece carriers (41a, 41b) and/or their sliding pieces (42a, 42b) are in each case constructed identically.

## Revendications

1. Plateforme de chargement autoélévatrice pour un véhicule, comportant un mécanisme de levage (30) pour soulever et abaisser une plateforme (50) et des rails de guidage (21), dans lesquels le mécanisme de levage (30) est retenu à l'état suspendu respectivement avec un chariot vertical (32) et est déplaçable en glissant entre une position de travail située en arrière du véhicule et une position en cours de déplacement, située au-dessous du véhicule, chaque chariot (32) comportant un élément de guidage avant (40a) possédant un coulisseau (42a) sur son côté supérieur et un élément de guidage arrière (40b) comportant un coulisseau (42b) sur son côté inférieur,
**caractérisée en ce**
**que** l'élément de guidage avant (40a) est enfiché à partir du haut sur le chariot (32) est y est bloqué à angle droit par rapport à la direction d'enfichage sur le chariot (32), et/ou
**que** l'élément de guidage arrière (40b) est enfiché à partir du bas sur le chariot (32) dans une ouverture (32.3) et y est bloqué à angle droit par rapport à la direction d'enfichage sur le chariot (32).

2. Plateforme de chargement autoélévatrice selon la revendication 1, **caractérisée en ce que** l'élément de guidage avant (40a) est inséré dans un évidement (32.5), ouvert vers le haut, du chariot (32).

3. Plateforme de chargement autoélévatrice selon la revendication 1 ou 2, **caractérisée en ce que** l'élément de guidage avant (40a) est guidé de manière à être déplaçable verticalement et également est monté de manière à pouvoir basculer dans l'évidement (32.5) du chariot (32).

4. Plateforme de chargement autoélévatrice selon la revendication 3, **caractérisée en ce qu'**une surface d'appui (32.6) du chariot (32), qui coopère avec le coulisseau (42a) de l'élément de guidage avant (40a), est cintrée avec une forme convexe dans l'évidement (32.5) du chariot (32).

5. Plateforme de chargement autoélévatrice selon l'une des revendications précédentes, **caractérisée en ce que** l'élément de guidage arrière (40b) est guidé de manière à être déplaçable verticalement et également est monté de manière à pouvoir basculer dans l'évidement (32.5) du chariot (32).

6. Plateforme de chargement autoélévatrice selon l'une quelconque des revendications précédentes, **caractérisée en ce qu'**une surface d'appui (32.2) du chariot (32), qui coopère avec le coulisseau (42b) de l'élément de guidage arrière (40b), est cintrée avec une forme convexe dans l'ouverture (32.3) du chariot (32).

7. Plateforme de chargement autoélévatrice selon l'une quelconque des revendications précédentes, **caractérisée en ce que** l'élément de guidage avant et/ou l'élément de guidage arrière (40a, 40b) font saillie des deux côtés du chariot (32).

8. Plateforme de chargement autoélévatrice selon l'une des revendications précédentes, **caractérisée en ce que** le coulisseau (42a, 42b) de l'élément de guidage avant et/ou arrière (40a, 40b) possède une section transversale en forme de U, lorsqu'on regarde dans la direction de guidage du chariot (32).

9. Plateforme de chargement autoélévatrice selon l'une des revendications précédentes, **caractérisée en ce que** l'élément de guidage avant et/ou l'élément de guidage arrière (40a, 40b) comportent un porte-coulisseau (41a, 41b), sur lequel est retenu le coulisseau (42a, 42b).

10. Plateforme de chargement autoélévatrice selon les revendications 8 et 9, **caractérisée en ce que** le porte-coulisseau avant (41a) et/ou le porte-coulisseau arrière (41b) possèdent une section transversale en forme de U, lorsqu'on regarde transversalement par rapport à la direction de guidage du chariot (32), et que le porte-coulisseau (41a; 41b) et son coulisseau (42a) s'engagent l'un dans l'autre en étant pivotés respectivement de 90° l'un par rapport à l'autre, selon une liaison par formes complémentaires et notamment sur toute leur surface.

11. Plateforme de chargement autoélévatrice selon les revendications 9 ou 10, **caractérisée en ce que** les deux porte-coulisseaux (41a, 41b) et/ou leurs coulisseaux (42a, 42b) sont respectivement identiques.
